# EUROPÄISCHE PATENTSCHRIFT

(11) **EP 2 737 124 B1**
(45) Veröffentlichungstag und Bekanntmachung des Hinweises auf die Patenterteilung: **14.06.2017**
(21) Anmeldenummer: 12728271.3
(22) Anmeldetag: 18.06.2012
(51) Int. Cl.: C08G 18/76, D21F 3/02, C08G 18/10, C08G 18/44

(54) **VERFAHREN ZUR HERSTELLUNG EINES PRESSMANTELS FÜR EINE SCHUHPRESSE AUF BASIS VON AUS MDI-POLYCARBONAT-PREPOLYMER GEBILDETEM VERNETZTEM POLYURETHAN**
METHOD FOR MANUFACTURING A PRESS SLEEVE FOR A SHOE PRESS BASED ON CROSSLINKED POLYURETHANE FORMED FROM MDI-POLYCARBONATE PREPOLYMER
PROCÉDÉ POUR LA FABRICATION D'UNE ENVELOPPE DE PRESSE POUR UNE PRESSE À SABOT À BASE DE POLYURÉTHANE RÉTICULÉ FORMÉ À PARTIR D'UN PRÉPOLYMÈRE MDI-POLYCARBONATE

(30) Priorität: 27.07.2011 DE 102011079894
(43) Veröffentlichungstag der Anmeldung: 04.06.2014
(73) Patentinhaber: Voith Patent GmbH, 89522 Heidenheim (DE)
(72) Erfinder: DELMAS, Delphine, 89522 Heidenheim (DE); MATUSCHCZYK, Uwe, 73312 Geislingen (DE); REICHERT, Hermann, 89522 Heidenheim (DE)
(86) Internationale Anmeldenummer: PCT/EP2012/061552
(87) Internationale Veröffentlichungsnummer: WO 2013/013891

(56) Entgegenhaltungen:
- EP-A1- 1 350 889
- EP-A1- 1 609 905
- EP-A1- 2 248 944

## Beschreibung

Die vorliegende Erfindung betrifft ein Verfahren zur Herstellung eines Pressmantels für eine Presswalze, insbesondere für eine Presswalze einer Schuhpresse zur Entwässerung einer Faserstoffbahn, insbesondere einer Papier-, Karton-, Tissue- oder Zellstoffbahn, welcher wenigstens eine vernetztes Polyurethan enthaltende Schicht umfasst. Zudem betrifft die vorliegende Erfindung ein Verfahren zur Herstellung eines Transportbandes, insbesondere für eine Maschine zur Herstellung oder Behandlung einer Faserstoffbahn, insbesondere Papier-, Karton- oder Tissuemaschine, welches wenigstens eine vernetztes Polyurethan enthaltende Schicht umfasst.

Presswalzen werden in einer Vielzahl von Pressen und beispielsweise in der Form von Schuhwalzen in Schuhpressen eingesetzt, welche wiederum insbesondere zur Entwässerung von Faserstoffbahnen, wie Papierbahnen, verwendet werden. Derartige Schuhpressen sind aus einer Schuhwalze und einer Gegenwalze mit einem dazwischen ausgebildeten Pressspalt aufgebaut. Dabei bestehen Schuhwalzen aus einem stationären, d.h. nicht rotierenden, Presselement, nämlich dem Schuh, und aus einem den Schuh umlaufenden flexiblen Pressmantel. Üblicherweise wird der Schuh durch ein diesen tragendes Joch abgestützt und über hydraulische Presselemente an den diesen umlaufenden Pressmantel angepresst. Dabei wird in der Regel zwischen dem Schuh und dem Pressmantel zur Schmierung ein Ölfilm aufgebaut. Aufgrund der konkaven Ausgestaltung des Schuhs an seiner der Gegenwalze gegenüberliegenden Seite ergibt sich ein vergleichsweise langer Pressspalt, welcher etwa 20-mal länger ist als der von herkömmlichen, aus zwei umlaufenden Walzen bestehenden Pressen.

Bei dem Betrieb der Schuhpresse wird eine Faserstoffbahn zusammen mit einem oder zwei Pressfilz(en) durch den Pressspalt geführt, wobei die aufgrund des in dem Pressspalt auf die Faserstoffbahn ausgeübten Drucks aus der Faserstoffbahn austretende Flüssigkeit, welche neben Wasser gelöste und ungelöste Verbindungen, wie beispielsweise Fasern, Faserbruchstücke, Füllstoffe und/oder Additive, enthält, von dem Pressfilz und von in der Pressmanteloberfläche vorgesehen Vertiefungen vorübergehend aufgenommen wird. Nach dem Verlassen des Pressspalts wird die von dem Pressmantel aufgenommene Flüssigkeit von dem Pressmantel abgeschleudert, bevor der Pressmantel erneut in den Presspalt eintritt. Zudem wird das von dem Pressfilz aufgenommene Wasser nach dem Verlassen des Pressspalts mit Saugelementen entfernt. Aufgrund des wegen der konkaven Ausgestaltung des Schuhs vergleichsweise langen Pressspalts wird mit einer solchen Schuhpresse im Vergleich zu einer aus zwei rotierenden Walzen bestehenden Presse eine wesentlich bessere Entwässerung der Faserstoffbahn erreicht, so dass die nachfolgende thermische Trocknung entsprechend kürzer ausfallen kann. Auf diese Weise wird eine besonders schonende Entwässerung der Faserstoffbahn erreicht.

Ein Pressmantel einer solchen Schuhpresse muss idealerweise eine Vielzahl von Anforderungen erfüllen, um zu optimalen Ergebnissen zu führen. Zum einen muss ein solcher Pressmantel ausreichend flexibel sein, um um den Schuh herum geführt werden zu können. Gleichzeitig muss der Pressmantel ausreichend steif sein, um nicht unter der in dem Pressspalt herrschenden Presslast zu stark verformt und deformiert zu werden. Zudem muss ein Pressmantel eine hohe Verschleißbeständigkeit, eine gute Abriebsfestigkeit, eine hohe Rissbildungsbeständigkeit, eine gute Risswachstumsbeständigkeit und eine hohe Beständigkeit gegenüber Chemikalien, wie insbesondere Wasser, Öl, Säuren, Basen und Lösemitteln, aufweisen.

Um diese mannigfaltigen Anforderungen zumindest teilweise zu erfüllen, sind solche Pressmäntel üblicherweise aus faserverstärktem Polyurethan aufgebaut, also aus einem Verbundwerkstoff, bei dem in einer Matrix aus vernetztem Polyurethan ein Fasergelege oder Fasergewebe eingebettet ist. Dabei sind sowohl einlagige als auch entsprechende mehrlagige Pressmäntel bekannt.

Aus der EP 2 284 314 A1 ist ein Pressmantel für eine Schuhpresse bekannt, welcher aus einer oder mehreren Lagen aus vernetztem Polyurethan, in das Fasergewebe eingebettet ist, zusammengesetzt ist. Dabei ist das vernetzte Polyurethan das Reaktionsprodukt aus einem Prepolymer, das aus einer 55 bis 100 Mol-% p-Phenylendiisocyanat enthaltenden Isocyanatkomponente und einem Polyol hergestellt worden ist, und einer Vernetzerkomponente, welche 65 bis 100 Mol-% eines oder mehrere bestimmter Polyamine enthält.

In der EP 2 248 944 A1 wird ein Pressmantel für eine Schuhpresse beschrieben, welcher aus einer Lage aus vernetztem Polyurethan, in das Fasergewebe eingebettet ist, zusammengesetzt ist. Bei dem vernetzten Polyurethan handelt es sich um das Reaktionsprodukt aus einem Prepolymer, das aus einer 55 bis 100 Mol-% p-Phenylendiisocyanat, 4,4'-Methylendiphenyldiisocyanat oder Toluylendiisocyanat enthaltenden Isocyanatkomponente und einer Polypropylenglykol, Polytetramethylenglykol oder Polycarbonatdiol enthaltenden Polyolkomponente hergestellt worden ist, und einer Vernetzerkomponente, welche 75 bis 99,9 Mol-% einer aliphatischen Diolverbindung mit einem Molekulargewicht zwischen 62 und 1.000, Hydrochinon-bis-β-hydroxylethylether oder einer organischen Polyaminverbindung mit einem Molekulargewicht zwischen 108 und 1.300 und 25 bis 0,1 Mol-% einer aliphatischen Triolverbindung mit einem Molekulargewicht zwischen 92 und 134 enthält. Zudem offenbart diese Druckschrift einen entsprechenden Pressmantel, zu dessen Herstellung eine Vernetzerkomponente eingesetzt wird, welche 60 bis 99,8 Mol-% einer aliphatischen Diolverbindung mit einem Molekulargewicht zwischen 62 und 1.000 oder Hydrochinon-bis-β-hydroxylethylether, 0,1 bis 15 Mol-% einer organischen Polyaminverbindung mit einem Molekulargewicht zwischen 108 und 1.300 und 25 bis 0,1 Mol-% einer aliphatischen Triolverbindung mit einem Molekulargewicht zwischen 92 und 134 enthält.

Aus der EP 1 350 889 und aus der EP 1 609 905 sind ferner Bänder für Papiermaschinen aus Polyurethan bekannt, das aus einem durch ein Reaktionsprodukt von Methylendiphenyldiisocyant und Polycarbonatpolyol gebildeten Prepolymer und einem Vernetzer hergestellt ist.

Obwohl die vorstehenden Pressmäntel eine ausreichende Flexibilität und gleichzeitig ausreichende Steifigkeit aufweisen, sind deren chemische Beständigkeit insbesondere gegenüber Wasser und Öl, deren Abriebsfestigkeit, deren Rissbildungsbeständigkeit, deren Risswachstumsbeständigkeit und deren Quellverhalten verbesserungsbedürftig.

Transportbänder werden u.a. in Maschinen zur Herstellung oder Behandlung einer Faserstoffbahn, beispielsweise in der Pressenpartie, eingesetzt, um die Faserstoffbahn durch den Pressspalt und anschließend zu einer Transferstelle zu transportieren, an der die Faserstoffbahn an die nachfolgende Trockenpartie übergeben wird. Solche Transportbänder umfassen in der Regel zumindest eine die Papierseite des Bandes bereitstellende Polymerbeschichtung, in welche ein lastaufnehmendes textiles Flächengebilde eingebettet ist. Solche Transportbänder sind beispielsweise in der DE 10 2007 055 864 A1 beschrieben. Auch bei diesen sind die chemische Beständigkeit insbesondere gegenüber Wasser und Öl, die Abriebsfestigkeit, die Rissbildungsbeständigkeit, die Risswachstumsbeständigkeit und das Quellverhalten verbesserungsbedürftig.

Aufgabe der vorliegenden Erfindung ist daher die Bereitstellung eines Verfahrens zur Herstellung eines Pressmantels für eine Presswalze einer Schuhpresse bzw. eines Transportbandes, wobei der Pressmantel bzw. das Transportband eine hohe Verschleißbeständigkeit, eine gute Abriebsfestigkeit, eine hohe Rissbildungsbeständigkeit, eine gute Risswachstumsbeständigkeit, eine niedrige Quellung und eine hohe Beständigkeit gegenüber Chemikalien, wie insbesondere Wasser, Öl, Säuren, Basen und Lösemitteln, aufweist und sich gleichzeitig durch eine hinreichend hohe Flexibilität und Steifigkeit auszeichnet.

Erfindungsgemäß wird diese Aufgabe gelöst durch die Bereitstellung eines Verfahrens zur Herstellung eines Pressmantels für eine Presswalze, insbesondere für eine Presswalze einer Schuhpresse zur Entwässerung einer Faserstoffbahn, insbesondere einer Papier-, Karton-, Tissue- oder Zellstoffbahn, bzw. eines Transportbandes, insbesondere für eine Maschine zur Herstellung oder Behandlung einer Faserstoffbahn, insbesondere Papier-, Karton- oder Tissuemaschine, wobei der Pressmantel bzw. das Transportband wenigstens eine vernetztes Polyurethan enthaltende Schicht umfasst, wobei das vernetzte Polyurethan durch den Schritt erhalten wird, bei dem ein Prepolymer, welches das Reaktionsprodukt einer Methylendiphenyldiisocyanat (MDI) enthaltenden Isocyanatkomponente und einer ein Polycarbonatpolyol enthaltenden Polyolkomponente ist, mit einer Vernetzerkomponente reagiert wird, welche wenigstens ein Polyol mit einem gewichtsgemittelten Molekulargewicht von mehr als 1.000 g/mol enthält. Diese Lösung basiert auf der überraschenden Erkenntnis, dass ein Pressmantel bzw. Transportband aus wenigstens einer Schicht auf Basis von vernetztem Polyurethan, das aus MDI, einem Polycarbonatpolyol und einem Vernetzer auf Basis von vergleichsweise langkettigem Polyol, nämlich einem Polyol mit einem gewichtsgemittelten Molekulargewicht von mehr als 1.000 g/mol, zusammengesetzt ist, nicht nur - im Falle eines Pressmantels - eine für dessen Einsatz in einer Schuhpresse hinreichend hohe Flexibilität und gleichzeitig ausreichend hohe Steifigkeit aufweist, sondern sich insbesondere auch durch eine hohe Verschleißbeständigkeit, eine exzellente Abriebsfestigkeit, eine hohe Rissbildungsbeständigkeit, eine exzellente Risswachstumsbeständigkeit, eine niedrige Quellung und eine hohe Beständigkeit gegenüber Wasser, Öl, Säuren, Basen und Lösemitteln auszeichnet, weswegen dieser/dieses - im Falle eines Pressmantels -hervorragend zur Verwendung in einer Presswalze, insbesondere in einer Presswalze einer Schuhpresse zur Entwässerung einer Faserstoffbahn, insbesondere einer Papier-, Karton-, Tissue- oder Zellstoffbahn, oder - im Falle eines Transportbandes - hervorragend zur Verwendung beispielsweise in der Presspartie einer Maschine zur Herstellung oder Behandlung einer Faserstoffbahn, insbesondere Papier-, Karton- oder Tissuemaschine, geeignet ist. Dies liegt insbesondere auch darin begründet, dass durch den Einsatz des vergleichsweise langkettigen Polyolvernetzers ein Polyurethanpolymer erhalten wird, welches selbst bei einer hohen Vernetzungsdichte, welche zu einer hohen Härte, Steifigkeit, Rissbildungsbeständigkeit, Risswachstumsbeständigkeit, Chemikalienbeständigkeit und Verschleißbeständigkeit führt, eine ausreichend hohe Flexibilität aufweist.

Wie dargelegt, erlaubt der Einsatz des vergleichsweise langkettigen Polyolvernetzers selbst bei der Einstellung einer die wesentlichen mechanischen Eigenschaften, wie Rissbildungsbeständigkeit, Risswachstumsbeständigkeit, Chemikalienbeständigkeit und Verschleißbeständigkeit, des Pressmantels bzw. Transportbandes begünstigenden vergleichsweise hohen Vernetzungsdichte des Polyurethans eine ausreichend hohe Flexibilität des Pressmantels bzw. Transportbandes. Anderseits können bei zu langkettigen Vernetzermolekülen die gewünschte hohe Rissbildungsbeständigkeit, Risswachstumsbeständigkeit, Chemikalienbeständigkeit und Verschleißbeständigkeit selbst bei hoher Vernetzungsdichte nicht mehr in einem ausreichend hohen Ausmaß erhalten werden. Aus diesem Grund ist es bevorzugt, dass das wenigstens eine in der Vernetzerkomponente enthaltene Polyol ein gewichtsgemitteltes Molekulargewicht zwischen mehr als 1.000 und 10.000 g/mol, besonders bevorzugt zwischen mehr als 1.000 und 4.000 g/mol und ganz besonders bevorzugt zwischen 1.200 und 3.500 g/mol aufweist.

Grundsätzlich ist die vorliegende Erfindung bezüglich der Hydroxylgruppenfunktionalität des eingesetzten Polyolvernetzers nicht besonders beschränkt. Gute Ergebnisse werden insbesondere erhalten, wenn die Hydroxylgruppenfunktionalität des wenigstens einen in der Vernetzerkomponente enthaltenen Polyols mit einem gewichtsgemittelten Molekulargewicht von mehr als 1.000 g/mol zwischen 2 und 8 beträgt. Besonders bevorzugt beträgt die Hydroxylgruppenfunktionalität des wenigstens einen in der Vernetzerkomponente enthaltenen Polyols mit einem gewichtsgemittelten Molekulargewicht von mehr als 1.000 g/mol zwischen 2 und 4 und ganz besonders bevorzugt 2.

Gemäß einer besonders bevorzugten Ausführungsform der vorliegenden Erfindung ist der vergleichsweise langkettige Polyolvernetzer, das heißt das wenigstens eine in der Vernetzerkomponente enthaltene Polyol mit einem gewichtsgemittelten Molekulargewicht von mehr als 1.000 g/mol, ein Polycarbonatpolyol mit einem gewichtsgemittelten Molekulargewicht von mehr als 1.000 g/mol. Überraschenderweise weist ein Pressmantel aus wenigstens einer Schicht auf Basis von vernetztem Polyurethan, das aus Methylendiphenyldiisocyanat, einem Polycarbonatpolyol und einem Vernetzer auf Basis von vergleichsweise langkettigem Polycarbonatpolyol, nämlich einem Polycarbonatpolyol mit einem gewichtsgemittelten Molekulargewicht von mehr als 1.000 g/mol, zusammengesetzt ist, für die Verwendung als Transportband oder als Pressmantel in einer Schuhpresse besonders gute Eigenschaften und insbesondere eine exzellente Beständigkeit gegenüber Wasser, Öl, Säuren, Basen und Lösemitteln, eine hohe Abriebsfestigkeit, eine exzellente Rissbildungs- und Risswachstumsbeständigkeit sowie eine niedrige Quellung auf.

Gute Ergebnisse werden insbesondere mit Polycarbonatpolyolen erhalten, welche einen Carbonatgruppengehalt pro Molekül zwischen 20 und 80 Gew.-% und bevorzugt zwischen 25 und 50 Gew.-% aufweisen.

In Weiterbildung des Erfindungsgedankens wird es vorgeschlagen, dass das Polycarbonatpolyol die allgemeine Formel (I) aufweist:

HO-R¹-(O(O)C-O-R²)ₙ-OH (I)

worin
R¹ und R², unabhängig voneinander, eine aliphatische, alicyclische, aromatische oder heterocyclische Kohlenwasserstoffgruppe, welche ggf. substituiert ist, bevorzugt eine ggf. substituierte aliphatische, alicyclische, aromatische oder heterocyclische C₁-C₂₀-Kohlenwasserstoffgruppe, besonders bevorzugt eine ggf. OH-Gruppen substituierte, geradkettige oder verzweigte C₁-C₁₄-Alkylgruppe und ganz besonders bevorzugt besonders bevorzugt eine ggf. OH-Gruppen substituierte, geradkettige oder verzweigte C₁-C₁₀-Alkylgruppe sind und
n eine ganze Zahl zwischen 2 und 50, bevorzugt zwischen 4 und 40 und besonders bevorzugt zwischen 8 und 30 ist.

Zusätzlich zu dem langkettigen Polyolvernetzer kann die zur Vernetzung des Prepolymers eingesetzte Vernetzerkomponente wenigstens einen Aminvernetzer enthalten. Gute Ergebnisse werden diesbezüglich insbesondere erhalten, wenn das wenigstens eine Amin aus der Gruppe ausgewählt ist, welche aus 4,4'-Methylen-bis-(2,6-diethyl-3-chloranilin), 4,4'-Methylen-bis-(2-chloranilin), 4,4'-Methylen-bis-(2-ethylbenzylamin), 4,4'-Methylen-bis-(2,6-diethylanilin), 4,4'-Methylen-bis-(cyclohexylamin), Diethylmethylbenzoldiamin, 4,4'-Diaminodicyclohexylmethan, 4,4'-Diamino-3,3'-dimethyl-dicyclohexylmethan, 4,4'-Diaminodiphenylmethan, 3,5-Dimethylthio-tolyl-diamin, 3,5-Dimethyltolyl-2,4-diamin, 3,5-Dimethyltolyl-2,6-diamin, Polytetramethylenoxid-di-p-aminobenzoat, Poly(tetramethylen-3-methyltetramethylenether)glykol-bis-(4-aminobenzoat), Trimethylen-bis-(4-aminobenzoat), Isobutyl-4-chlor-3,5-diaminobenzoat, Tetramethylammoniumbromid, Ethylendiamin, Hydrazin, Hexamethylendiamin, o-Phenylendiamin, m-Phenylendiamin, p-Phenylendiamin, 1,4-Diaminocyclohexan, 1,2-Diaminocyclohexan, Isophorondiamin, Diethyltoluendiamin, 3,5-Dimethylthio-2,4-toluendiamin, 3,5-Dimethylthio-2,6-toluendiamin und beliebigen Mischungen aus zwei oder mehr der vorgenannten Verbindungen besteht.

Zur Initierung der Vernetzungsreaktion ist es weiter bevorzugt, dass die zur Vernetzung des Prepolymers eingesetzte Vernetzerkomponente neben dem Polyol mit einem gewichtsgemittelten Molekulargewicht von mehr als 1.000 g/mol und dem optionalen Aminvernetzer wenigstens einen Katalysator enthält. Grundsätzlich können als Katalysator alle zur Initierung der Vernetzungsreaktion zwischen einem Prepolymer aus einem Isocyanat und einem Polyol und einem Polyolvernetzer geeigneten Katalysatoren eingesetzt werden, wie beispielsweise metallorganische Verbindungen und/oder tertiäre Amine. Besonders geeignet für diesen Zweck sind beispielsweise metallorganische Verbindungen von Zink, Cobalt, Bismut, Quecksilber, Cadmium oder Kalium.

In Weiterbildung des Erfindungsgedankens wird es vorgeschlagen, dass die zur Vernetzung des Prepolymers eingesetzte Vernetzerkomponente neben dem Polyol mit einem gewichtsgemittelten Molekulargewicht von mehr als 1.000 g/mol und dem optionalen Aminvernetzer wenigstens einen Katalysator enthält, welcher aus der Gruppe ausgewählt ist, welche aus Dibutylzinndilaurat, Zinnoctoat, Dioctylzinndiacetat, Dibutylzinnmercaptid, Dibutylzinnoxid, Dimethylzinnmercaptid, Dioctylzinnmercaptid, Dimethylzinncarboxylat, Bis-(2-dimethylaminoethyl)ether, Alkylmorpholinen, 1,4-Diazabicyclooctan, N,N-Alkylbenzylamin, 1,2-Dimethylimidazol, N,N-Dimethylcyclohexylamin, Triethylendiamin, N,N,N',N'-Tetramethylendiamin, Dioctyldicarboxylat, Dioctylzinndimercaptid und beliebigen Mischungen aus zwei oder mehr der vorgenannten Verbindungen besteht.

Zusätzlich zu dem Polyol mit einem gewichtsgemittelten Molekulargewicht von mehr als 1.000 g/mol, dem optionalen Aminvernetzer und dem optionalen Katalysator kann die zur Vernetzung des Prepolymers eingesetzte Vernetzerkomponente ferner wenigstens ein weiteres Polyol enthalten. Falls vorhanden, ist das wenigstens eine weitere Polyol bevorzugt aus der Gruppe ausgewählt, welche aus Ethylenglykol, Diethylenglykol, Propylenglykol, Dipropylenglykol, Polypropylenglykol, Polybutylenglykol, 1,4-Butandiol, 1,3-Propandiol, 1,5-Pentandiol, 1,6-Hexandiol, Polyethylenglykol, N-N'-Bis-(2-hydroxypropylanilin), Di-(8-hydroxyethyl)ether, Bis-(2-hydroxyethyl)ether, Triolen, Polytetrahydrofuranen und beliebigen Mischungen aus zwei oder mehr der vorgenannten Verbindungen besteht.

Gemäß einer weiteren bevorzugten Ausführungsform der vorliegenden Erfindung ist es vorgesehen, dass die Vernetzerkomponente ferner wenigstens einen Füllstoff enthält. Gute Ergebnisse werden insbesondere erhalten, wenn der Füllstoff aus der Gruppe ausgewählt ist, welche aus Ton, Montmorillonit, Saponit, Hektorit, Glimmer, Vermiculit, Bentonit, Nontronit, Beidellit, Volkonskoit, Manadiit, Kenyait, Smektit, Bederit, Ruß, Siliciumcarbid, Kieselsäuresalz, Metalloxiden und beliebigen Mischungen aus zwei oder mehr der vorgenannten Verbindungen besteht.

Die Menge an in der Vernetzungsreaktion einzusetzendem Polyol mit einem gewichtsgemittelten Molekulargewicht von mehr als 1.000 g/mol hängt von der gewünschten Vernetzungsdichte ab, welche wiederum von der einzustellenden Härte, Verschleißbeständigkeit, Abriebsfestigkeit, Rissbildungsbeständigkeit, Risswachstumsbeständigkeit, Quellung und Beständigkeit gegenüber Wasser, Öl, Säuren, Basen und Lösemitteln abhängt. Es ist bevorzugt, dass die Vernetzerkomponente zwischen 0,1 und 75 Mol-%, besonders bevorzugt zwischen 1 und 60 Mol-% und ganz besonders bevorzugt zwischen 2 und 40 Mol-% Polyol mit einem gewichtsgemittelten Molekulargewicht von mehr als 1.000 g/mol enthält. Vorzugsweise beträgt die Kennzahl, also das Verhältnis der tatsächlich eingesetzten Isocyanatmenge zur stöchiometrischen Isocyanatmenge, zwischen 0,8 und 1,2 und besonders bevorzugt zwischen 0,9 und 1,1.

Vorzugsweise enthält die Vernetzerkomponente:
a) 0,1 bis 75 Mol-%, bevorzugt 1 bis 60 Mol-% und besonders bevorzugt 2 bis 40 Mol-% Polycarbonatpolyol mit einem gewichtsgemittelten Molekulargewicht von mehr als 1.000 g/mol,
b) 0 bis 50 Mol-%, bevorzugt 1 bis 20 Mol-% und besonders bevorzugt 1 bis 10 Mol-% eines Amins,
c) 0,01 bis 20 Mol-%, bevorzugt 0,1 bis 10 Mol-% und besonders bevorzugt 0,1 bis 5 Mol-% eines Katalysators und
d) 0 bis 99 Mol-%, bevorzugt 50 bis 90 Mol-% und besonders bevorzugt 70 bis 90 Mol-% eines weiteren Polyols,
wobei die Summe der einzelnen Komponenten 100 Mol-% beträgt.

Erfindungsgemäß ist das vernetzte Polyurethan auf Basis eines Prepolymers aufgebaut, welches das Reaktionsprodukt einer Methylendiphenyldiisocyanat enthaltenden Isocyanatkomponente und einer ein Polycarbonatpolyol enthaltenden Polyolkomponente ist. Bevorzugt weist das Prepolymer endständige Isocyanatgruppen auf. Bei dem Methylendiphenyldiisocyanat kann es sich insbesondere um 2,2'-Methylendiphenyldiisocyanat, 2,4'-Methylendiphenyldiisocyanat, 4,4'-Methylendiphenyldiisocyanat oder eine Mischung aus zwei oder mehr dieser Verbindungen handeln. Die Isocyanatkomponente kann neben dem Methylendiphenyldiisocyanat ein oder mehrere weitere Isocyanatverbindungen enthalten. Gleichermaßen kann auch die Polyolkomponente neben dem Polycarbonatpolyol ein oder mehrere andere Polyole enthalten. Allerdings ist es bevorzugt, dass die Isocyanatkomponente aus einem oder mehreren Methylendiphenyldiisocyanaten und die Polyolkomponente aus einem oder mehreren Polycarbonatpolyolen besteht, wobei es besonders bevorzugt ist, dass die Isocyanatkomponente aus einem Methylendiphenyldiisocyanat und die Polyolkomponente aus einem Polycarbonatpolyol besteht.

Vorzugsweise ist das Polycarbonatpolyol ein Polycarbonatpolyol gemäß der vorstehenden Formel (I) mit einem gewichtsgemittelten Molekulargewicht zwischen mehr als 1.000 und 10.000 g/mol, bevorzugt zwischen mehr als 1.000 und 4.000 g/mol und besonders bevorzugt zwischen 1.200 und 3.500 g/mol.

In Weiterbildung des Erfindungsgedankens wird es vorgeschlagen, dass das Prepolymer ein aus Methylendiphenyldiisocyanat und einem Polycarbonatpolyol bestehendes Prepolymer mit einem gewichtsgemittelten Molekulargewicht zwischen 1.000 und 4.000 g/mol und bevorzugt mit einem gewichtsgemittelten Molekulargewicht zwischen 1.500 und 3.500 g/mol ist.

Gemäß einer weiteren bevorzugten Ausführungsform der vorliegenden Erfindung weist das Prepolymer einen Isocyanatgehalt zwischen 4 und 20 Gew.-% und besonders bevorzugt zwischen 5 und 14 Gew.-% auf.

Ferner ist es bevorzugt, dass in der wenigstens ein zuvor beschriebenes vernetztes Polyurethan enthaltenden Schicht des erfindungsgemäßen Pressmantels bzw. Transportbandes eine verstärkende Faserstruktur, bevorzugt in der Form eines Fasergeleges oder eines Fasergewebes enthalten ist. Dabei bildet das wenigstens eine vernetzte Polyurethan die Matrix aus, in welcher das Fasergelege oder Fasergewebe eingebettet ist.

Grundsätzlich ist es auch möglich, dass wenigstens ein Teil der Polyurethanmatrix aus Schaum besteht.

Erfindungsgemäß enthält die wenigstens eine Schicht ein wie zuvor beschrieben zusammengesetztes vernetztes Polyurethan. Neben dem vernetzten Polyurethan kann der Polymeranteil der wenigstens einen Schicht weitere Polymere enthalten. Allerdings ist es bevorzugt, wenn der Polymeranteil der wenigstens einen Schicht zu mehr als 50 Gew.-%, besonders bevorzugt zu mehr als 80 Gew.-%, ganz besonders bevorzugt zu mehr als 90 Gew.-% und höchst bevorzugt ausschließlich aus einem wie zuvor beschrieben zusammengesetzten vernetzten Polyurethan besteht.

Der erfindungsgemäße Pressmantel kann einschichtig oder mehrschichtig ausgestaltet sein. Wenn der Pressmantel mehrschichtig ausgestaltet ist, ist es bevorzugt, dass zumindest die äußere Schicht wie vorstehend beschrieben zusammengesetzt ist. Alternativ dazu ist es auch möglich, dass die wie vorstehend beschrieben zusammengesetzte Zusammensetzung nur in einzelnen Bereichen des Pressmantels, wie beispielsweise am Schuhrand, enthalten ist.

Nachfolgend wird die vorliegende Erfindung rein beispielhaft anhand vorteilhafter Ausführungsformen und unter Bezugnahme auf die beigefügten Zeichnungen beschrieben.

Dabei zeigen:
- Fig. 1: eine schematische Ansicht einer Schuhpresse mit einem Pressmantel gemäß eines Ausführungsbeispiels der vorliegenden Erfindung und
- Fig. 2: eine schematische Ansicht einer eine Schuhpresse und ein Transportband umfassenden Presspartie einer Papiermaschine gemäß eines Ausführungsbeispiels der vorliegenden Erfindung.

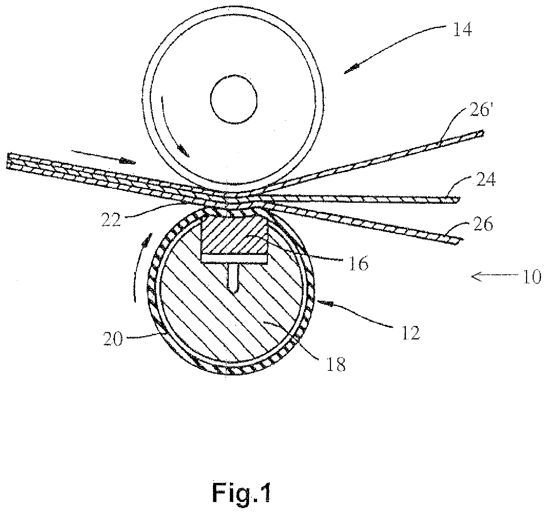

In der Fig. 1 ist eine Schuhpresse 10 dargestellt, welche eine Schuhwalze 12 und eine Gegenwalze 14 umfasst. Während die Gegenwalze 14 aus einer rotierenden zylindrisch ausgestalteten Walze besteht, ist die Schuhwalze 12 aus einem Schuh 16, einem diesen tragenden stehenden Joch 18 und einem Pressmantel 20 zusammengesetzt. Dabei wird der Schuh 16 durch das Joch 18 abgestützt und über hydraulische Presselemente (nicht dargestellt) an den diesen umlaufenden Pressmantel 20 angepresst. Aufgrund der konkaven Ausgestaltung des Schuhs 16 an seiner der Gegenwalze 14 gegenüberliegenden Seite ergibt sich ein vergleichsweise langer Pressspalt 22.

Die Schuhpresse 10 eignet sich insbesondere zur Entwässerung von Faserstoffbahnen 24, wie Papierbahnen. Bei dem Betrieb der Schuhpresse wird eine Faserstoffbahn 24 mit einem oder zwei Pressfilmen 26, 26' durch den Pressspalt 22 geführt, wobei die aufgrund des in dem Pressspalt 22 auf die Faserstoffbahn 24 ausgeübten Drucks aus der Faserstoffbahn 24 austretende Flüssigkeit, welche neben Wasser gelöste und ungelöste Verbindungen, wie beispielsweise Fasern, Faserbruchstücke, Füllstoffe und/oder Additive, enthält, von dem bzw. den Pressfilzen 26, 26' und von in der Pressmanteloberfläche vorgesehen Vertiefungen (nicht dargestellt) vorübergehend aufgenommen wird. Nach dem Verlassen des Pressspalts 22 wird die von dem Pressmantel 20 aufgenommene Flüssigkeit von dem Pressmantel 20 abgeschleudert, bevor der Pressmantel 20 erneut in den Presspalt 22 eintritt. Zudem wird das von dem Pressfilz 26, 26' aufgenommene Wasser nach dem Verlassen des Pressspalts 22 mit Saugelementen entfernt.

Aufgrund des wegen der konkaven Ausgestaltung des Schuhs 16 an seiner der Gegenwalze 14 gegenüberliegenden Seite vergleichsweise langen Pressspalts 22 wird mit einer solchen Schuhpresse 10 im Vergleich zu einer aus zwei rotierenden Walzen bestehenden Presse eine beträchtlich bessere Entwässerung der Faserstoffbahn 24 erreicht, so dass die nachfolgende thermische Trocknung entsprechend kürzer ausfallen kann. Auf diese Weise wird eine besonders schonende Entwässerung der Faserstoffbahn 24 erreicht.

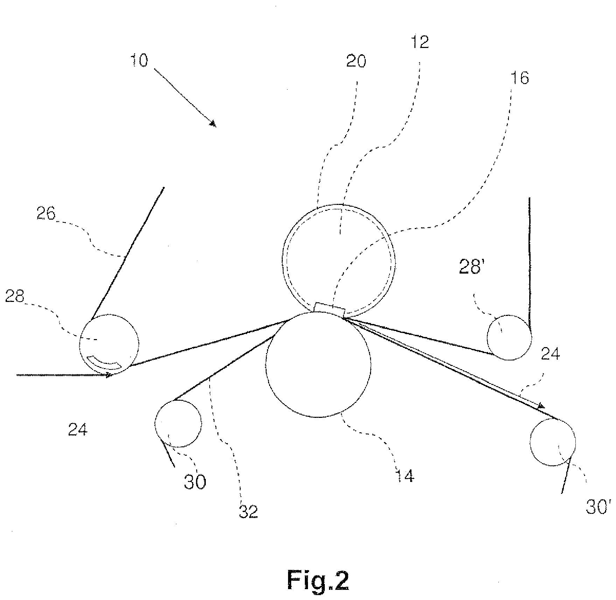

In der Fig. 2 ist ein Ausschnitt einer Presspartie einer Papiermaschine gezeigt, welche eine Schuhpresse 10 umfasst. Dabei umfasst die Schuhpresse 10, wie auch bei der in der Fig. 1 dargestellten Ausführungsform, eine einen Pressmantel 20 und ein Presselement bzw. Schuh 16 aufweisende Schuhwalze 12 und eine Gegenwalze 14, wobei zwischen dem Schuh 16 und der Gegenwalze 14 ein Pressspalt ausgebildet ist. Zudem umfasst dieser Teil der Papiermaschine zwei Saugwalzen 28, 28' und zwei Umlenkwalzen 30, 30'. Bei dem Betrieb der Papiermaschine wird ein durch die Saugwalzen 28, 28' geführter Filz 26, der an der Saugwalze 28 die Faserstoffbahn 24 aufnimmt, durch den Pressspalt geführt. Zudem wird unterhalb des die Faserstoffbahn 24 führenden Filzes 26 ein durch die Umlenkwalzen 30, 30' geführtes Transportband bzw. Transferband 32 durch den Pressspalt geführt, wobei das Transferband 32 im Pressspalt die Faserstoffbahn 24 von dem Filz 26 übernimmt und über die Umlenkwalze 30' aus dem Pressspalt abführt. Aufgrund des in dem Pressspalt auf die Faserstoffbahn 24 ausgeübten Drucks tritt aus der Faserstoffbahn Flüssigkeit aus, welche neben Wasser gelöste und ungelöste Verbindungen, wie beispielsweise Fasern, Faserbruchstücke, Füllstoffe und/oder Additive, enthält, welche von dem Filz 26 und von in der Pressmanteloberfläche vorgesehen Vertiefungen vorübergehend aufgenommen wird. Nach dem Verlassen des Pressspalts wird die von dem Pressmantel 20 aufgenommene Flüssigkeit von dem Pressmantel 20 abgeschleudert, bevor der Pressmantel 20 erneut in den Presspalt eintritt. Zudem wird das von dem Filz 26 aufgenommene Wasser nach dem Verlassen des Pressspalts mit an der Saugwalze 28' vorgesehene Saugelementen entfernt. Aufgrund des wegen der konkaven Ausgestaltung des Schuhs 16 vergleichsweise langen Pressspalts wird mit einer solchen Schuhpresse im Vergleich zu einer aus zwei rotierenden Walzen bestehenden Presse eine wesentlich bessere Entwässerung der Faserstoffbahn 24 erreicht, so dass die nachfolgende thermische Trocknung entsprechend kürzer ausfallen kann. Auf diese Weise wird eine besonders schonende Entwässerung der Faserstoffbahn 24 erreicht.

Nachfolgend wird die vorliegende Erfindung anhand eines die Erfindung erläuternden, diese aber nicht einschränkenden Beispiels erläutert.

### Beispiel

Es wurde ein Pressmantel hergestellt, indem ein Prepolymer aus MDI und Polycarbonat (C₆), wobei das Prepolymer ein gewichtsgemitteltes Molekulargewicht von 2.600 g/mol und einen NCO-Gehalt von 10 % aufwies, mit einer Vernetzerkomponente reagiert wurde, welche zu 65 Gew.-% aus einem Polycarbonatpolyol gemäß der Formel (I), worin R¹ und R² jeweils eine C₆-Alkylgruppe waren, mit einem gewichtsgemittelten Molekulargewicht von 2.000 g/mol und zu 35 Gew.-% aus Methylen-bis-(chlor-diethylanilin) (MCDEA) bestand. Die Kennzahl betrug 1,0.

Der so hergestellte Pressmantel wies die nachfolgenden Eigenschaften auf:
Shore A- Härte: 93,
Shore A- Härte nach 150 Stunden Wasserlagerung bei 95°C: 93,
Abrieb: 32 mm³,
Abrieb nach 150 Stunden Wasserlagerung bei 95°C: 32 mm³,
Risswachstum bei 1. Mio. Belastungen in BW-Maschine: 0,5 mm,
Quellung in Wasser nach 72 Stunden bei 80°C: 1,7 %,
Quellung in Wasser nach 150 Stunden bei 150°C: 1,9 %.

### Bezugszeichenliste

- 10: Schuhpresse
- 12: Schuhwalze
- 14: Gegenwalze
- 16: Schuh
- 18: stehendes Joch
- 20: Pressmantel
- 22: Presspalt
- 24: Faserstoffbahn
- 26, 26': Pressfilz
- 28, 28': Saugwalzen
- 30, 30': Umlenkwalzen
- 32: Transportband/Transferband

## Patentansprüche

1. Verfahren zur Herstellung eines Pressmantels für eine Presswalze, insbesondere für eine Presswalze einer Schuhpresse zur Entwässerung einer Faserstoffbahn, insbesondere einer Papier-, Karton-, Tissue- oder Zellstoffbahn, oder eines Transportbands, insbesondere für eine Maschine zur Herstellung oder Behandlung einer Faserstoffbahn, insbesondere Papier-, Karton- oder Tissuemaschine, wobei der Pressmantel bzw. das Transportband wenigstens eine vernetztes Polyurethan enthaltende Schicht umfasst, wobei das vernetzte Polyurethan durch den Schritt erhalten wird, bei dem ein Prepolymer, welches das Reaktionsprodukt einer Methylendiphenyldiisocyanat enthaltenden Isocyanatkomponente und einer ein Polycarbonatpolyol enthaltenden Polyolkomponente ist, mit einer Vernetzerkomponente reagiert wird, welche wenigstens ein Polyol mit einem gewichtsgemittelten Molekulargewicht von mehr als 1.000 g/mol enthält.

2. Verfahren nach Anspruch 1,
**dadurch gekennzeichnet, dass**
das wenigstens eine in der Vernetzerkomponente enthaltene Polyol ein gewichtsgemitteltes Molekulargewicht zwischen mehr als 1.000 und 10.000 g/mol, bevorzugt zwischen mehr als 1.000 und 4.000 g/mol und besonders bevorzugt zwischen 1.200 und 3.500 g/mol aufweist.

3. Verfahren nach Anspruch 1 oder 2,
**dadurch gekennzeichnet, dass**
das wenigstens eine in der Vernetzerkomponente enthaltene Polyol mit einem gewichtsgemittelten Molekulargewicht von mehr als 1.000 g/mol eine Hydroxylgruppenfunktionalität von 2 bis 8, bevorzugt von 2 bis 4 und besonders bevorzugt von 2 aufweist.

4. Verfahren nach zumindest einem der vorstehenden Ansprüche, **dadurch gekennzeichnet, dass**
das wenigstens eine in der Vernetzerkomponente enthaltene Polyol mit einem gewichtsgemittelten Molekulargewicht von mehr als 1.000 g/mol ein Polycarbonatpolyol mit einem gewichtsgemittelten Molekulargewicht von mehr als 1.000 g/mol ist.

5. Verfahren nach Anspruch 4,
**dadurch gekennzeichnet, dass**
das Polycarbonatpolyol einen Carbonatgruppengehalt zwischen 20 und 80 Gew.-% und bevorzugt zwischen 25 und 50 Gew.-% aufweist.

6. Verfahren nach Anspruch 4 oder 5,
**dadurch gekennzeichnet, dass**
das Polycarbonatpolyol die allgemeine Formel (I) aufweist:
HO-R¹-(O(O)C-O-R²)ₙ-OH (I)
worin
R¹ und R², unabhängig voneinander, eine aliphatische, alicyclische, aromatische oder heterocyclische Kohlenwasserstoffgruppe, welche ggf. substituiert ist, bevorzugt eine ggf. substituierte aliphatische, α-licyclische, aromatische oder heterocyclische C₁-C₂₀-Kohlenwasserstoffgruppe, besonders bevorzugt eine ggf. OH-Gruppen substituierte, geradkettige oder verzweigte C₁-C₁₄-Alkylgruppe und ganz besonders bevorzugt besonders bevorzugt eine ggf. OH-Gruppen substituierte, geradkettige oder verzweigte C₁-C₁₀-Alkylgruppe sind und
n eine ganze Zahl zwischen 2 und 50, bevorzugt zwischen 4 und 40 und besonders bevorzugt zwischen 8 und 30 ist.

7. Verfahren nach zumindest einem der vorstehenden Ansprüche, **dadurch gekennzeichnet, dass**
die Vernetzerkomponente ferner wenigstens ein Amin als Vernetzer enthält, wobei das wenigstens eine Amin bevorzugt aus der Gruppe ausgewählt ist, welche aus 4,4'-Methylen-bis-(2,6-diethyl-3-chloranilin), 4,4'-Methylen-bis-(2-chloranilin), 4,4'-Methylen-bis-(2-ethylbenzylamin), 4,4'-Methylen-bis-(2,6-diethylanilin), 4,4'-Methylen-bis-(cyclohexylamin), Diethylmethylbenzoldiamin, 4,4'-Diaminodicyclohexylmethan, 4,4'-Diamino-3,3'-dimethyl-dicyclohexylmethan, 4,4'-Diaminodiphenylmethan, 3,5-Dimethylthio-tolyl-diamin, 3,5-Dimethyltolyl-2,4-diamin, 3,5-Dimethyltolyl-2,6-diamin, Polytetramethylenoxid-di-p-aminobenzoat, Poly(tetramethylen-3-methyltetramethylenether)glykol-bis-(4-aminobenzoat), Trimethylen-bis-(4-aminobenzoat), Isobutyl-4-chlor-3,5-diaminobenzoat, Tetramethylammoniumbromid, Ethylendiamin, Hydrazin, Hexamethylendiamin, o-Phenylendiamin, m-Phenylendiamin, p-Phenylendiamin, 1,4-Diaminocyclohexan, 1,2-Diaminocyclohexan, Isophorondiamin, Diethyltoluendiamin, 3,5-Dimethylthio-2,4-toluendiamin, 3,5-Dimethylthio-2,6-toluendiamin und beliebigen Mischungen aus zwei oder mehr der vorgenannten Verbindungen besteht.

8. Verfahren nach zumindest einem der vorstehenden Ansprüche, **dadurch gekennzeichnet, dass**
die Vernetzerkomponente ferner wenigstens einen Katalysator enthält, wobei der wenigstens eine Katalysator bevorzugt eine metallorganische Verbindung und/oder ein tertiäres Amin ist und besonders bevorzugt eine Verbindung ist, welche aus der Gruppe ausgewählt ist, welche aus Dibutylzinndilaurat, Zinnoctoat, Dioctylzinndiacetat, Dibutylzinnmercaptid, Dibutylzinnoxid, Dimethylzinnmercaptid, Dioctylzinnmercaptid, Dimethylzinncarboxylat, Bis-(2-dimethylaminoethyl)ether, Alkylmorpholinen, 1,4-Diazabicyclooctan, N,N-Alkylbenzylamin, 1,2-Dimethylimidazol, N,N-Dimethylcyclohexylamin, Triethylendiamin, N,N,N',N'-Tetramethylendiamin, Dioctyldicarboxylat, Dioctylzinndimercaptid und beliebigen Mischungen aus zwei oder mehr der vorgenannten Verbindungen besteht.

9. Verfahren nach zumindest einem der vorstehenden Ansprüche, **dadurch gekennzeichnet, dass**
die Vernetzerkomponente ferner wenigstens ein weiteres Polyol enthält, welches bevorzugt aus der Gruppe ausgewählt ist, welche aus Ethylenglykol, Diethylenglykol, Propylenglykol, Dipropylenglykol, Polypropylenglykol, Polybutylenglykol, 1,4-Butandiol, 1,3-Propandiol, 1,5-Pentandiol, 1,6-Hexandiol, Polyethylenglykol, N-N'-Bis-(2-hydroxypropylanilin), Di-(8-hydroxyethyl)ether, Bis-(2-hydroxyethyl)ether, Triolen, Polytetrahydrofuranen und beliebigen Mischungen aus zwei oder mehr der vorgenannten Verbindungen besteht.

10. Verfahren nach zumindest einem der vorstehenden Ansprüche, **dadurch gekennzeichnet, dass**
die Vernetzerkomponente ferner wenigstens einen Füllstoff enthält, welcher bevorzugt aus der Gruppe ausgewählt ist, welche aus Ton, Montmorillonit, Saponit, Hektorit, Glimmer, Vermiculit, Bentonit, Nontronit, Beidellit, Volkonskoit, Manadiit, Kenyait, Smektit, Bederit, Ruß, Siliciumcarbid, Kieselsäuresalz, Metalloxiden und beliebigen Mischungen aus zwei oder mehr der vorgenannten Verbindungen besteht.

11. Verfahren nach zumindest einem der vorstehenden Ansprüche **dadurch gekennzeichnet, dass**
die Vernetzerkomponente zwischen 0,1 und 75 Mol-%, bevorzugt zwischen 1 und 60 Mol-% und besonders bevorzugt zwischen 2 und 40 Mol-% Polyol mit einem gewichtsgemittelten Molekulargewicht von mehr als 1.000 g/mol enthält.

12. Verfahren nach zumindest einem der vorstehenden Ansprüche, **dadurch gekennzeichnet, dass**
das Prepolymer ein aus Methylendiphenyldiisocyanat und einem Polycarbonatpolyol bestehendes Prepolymer mit einem gewichtsgemittelten Molekulargewicht zwischen 1.000 und 4.000 g/mol und bevorzugt mit einem gewichtsgemittelten Molekulargewicht zwischen 1.500 und 3.500 g/mol ist.

13. Verfahren nach zumindest einem der vorstehenden Ansprüche, **dadurch gekennzeichnet, dass**
das Prepolymer einen Isocyanatgehalt zwischen 4 und 20 Gew.-% und bevorzugt zwischen 5 und 14 Gew.-% aufweist.

14. Verfahren nach zumindest einem der vorstehenden Ansprüche, **dadurch gekennzeichnet, dass**
in der wenigstens einen Schicht das wenigstens eine vernetzte Polyurethan die Matrix ausbildet, in welcher ein Fasergelege oder ein Fasergewebe eingebettet ist.

## Claims

1. Method for manufacturing a press sleeve for a press roll, especially for a press roll in a shoe press to dewater a fibrous web, especially a paper, board, tissue or pulp web, or for manufacturing a transportation belt, especially for a machine to produce or treat a fibrous web, especially a paper, board or tissue machine, wherein the press sleeve or, respectively, the transportation belt comprises at least one layer comprising crosslinked polyurethane, wherein the crosslinked polyurethane is obtained by the step of reacting a prepolymer which is the reaction product between an isocyanate component comprising methylenediphenyl diisocyanate and a polyol component comprising a polycarbonate polyol with a crosslinker component comprising at least one polyol having a weight-averaged molecular weight of more than 1000 g/mol.

2. Method according to Claim 1,
**characterized in that**
the at least one polyol comprised in the crosslinker component has a weight-averaged molecular weight between more than 1000 and 10 000 g/mol, preferably between more than 1000 and 4000 g/mol and more preferably between 1200 and 3500 g/mol.

3. Method according to Claim 1 or 2,
**characterized in that**
the at least one polyol comprised in the crosslinker component has a weight-averaged molecular weight of more than 1000 g/mol and a hydroxyl group functionality of 2 to 8, preferably of 2 to 4 and more preferably of 2.

4. Method according to at least one of the preceding claims,
**characterized in that**
the at least one polyol comprised in the crosslinker component has a weight-averaged molecular weight of more than 1000 g/mol and is a polycarbonate polyol having a weight-averaged molecular weight of more than 1000 g/mol.

5. Method according to Claim 4,
**characterized in that**
the polycarbonate polyol has a carbonate group content between 20 and 80 wt% and preferably between 25 and 50 wt%.

6. Method according to Claim 4 or 5,
**characterized in that**
the polycarbonate polyol is of general formula (I):
**HO-R¹-(O(O)C-O-R²)ₙ-OH** **(I)**
where
R¹ and R² are each independently an aliphatic, alicyclic, aromatic or heterocyclic hydrocarbon group, which is optionally substituted, preferably an optionally substituted aliphatic, alicyclic, aromatic or heterocyclic C₁-C₂₀ hydrocarbon group, more preferably an optionally HO-substituted, straight-chain or branched C₁-C₁₄ alkyl group and still yet even more preferably an optionally HO-substituted, straight-chain or branched C₁-C₁₀ alkyl group, and
n is an integer between 2 and 50, preferably between 4 and 40 and more preferably between 8 and 30.

7. Method according to at least one of the preceding claims,
**characterized in that**
the crosslinker component further comprises at least one amine as crosslinker, wherein the at least one amine is preferably selected from the group consisting of 4,4'-methylene-bis(2,6-diethyl-3-chloroaniline), 4,4'-methylene-bis(2-chloroaniline), 4,4'-methylene-bis(2-ethylbenzylamine), 4,4'-methylene-bis(2,6-diethylaniline), 4,4'-methylene-bis(cyclohexylamine), diethylmethylbenzenediamine, 4,4'-diaminodicyclohexylmethane, 4,4'-diamino-3,3'-dimethyldicyclohexylmethane, 4,4'-diaminodiphenylmethane, 3,5-dimethylthiotolyl-diamine, 3,5-dimethyltolyl-2,4-diamine, 3,5-dimethyl-tolyl-2,6-diamine, polytetramethylene oxide di-p-amino-benzoate, poly(tetramethylene-3-methyltetramethylene ether) glycol bis(4-aminobenzoate), trimethylene bis(4-aminobenzoate), isobutyl 4-chloro-3,5-diaminobenzoate, tetramethylammonium bromide, ethylenediamine, hydrazine, hexamethylenediamine, o-phenylenediamine, m-phenylenediamine, p-phenylenediamine, 1,4-diaminocyclohexane, 1,2-diaminocyclohexane, isophoronediamine, diethyltoluenediamine, 3,5-dimethylthio-2,4-toluenediamine, 3,5-dimethylthio-2,6-toluenediamine and any desired mixtures of two or more of the aforementioned compounds.

8. Method according to at least one of the preceding claims,
**characterized in that**
the crosslinker component further comprises at least one catalyst, wherein the at least one catalyst is preferably an organometallic compound and/or a tertiary amine and more preferably is a compound selected from the group consisting of dibutyltin dilaurate, tin octoate, dioctyltin diacetate, dibutyltin mercaptide, dibutyltin oxide, dimethyltin mercaptide, dioctyltin mercaptide, dimethyltin carboxylate, bis(2-dimethylaminoethyl) ether, alkylmorpholines, 1,4-diazabicyclooctane, N,N-alkylbenzylamine, 1,2-dimethylimidazole, N,N-dimethylcyclohexylamine, triethylenediamine, N,N,N',N'-tetramethylenediamine, dioctyl dicarboxylate, dioctyltin dimercaptide and any desired mixtures of two or more of the aforementioned compounds.

9. Method according to at least one of the preceding claims,
**characterized in that**
the crosslinker component further comprises at least one further polyol, which is preferably selected from the group consisting of ethylene glycol, diethylene glycol, propylene glycol, dipropylene glycol, polypropylene glycol, polybutylene glycol, 1,4-butanediol, 1,3-propanediol, 1,5-pentanediol, 1,6-hexanediol, polyethylene glycol, N,N'-bis(2-hydroxypropylaniline), di(8-hydroxyethyl) ether, bis(2-hydroxyethyl) ether, triols, polytetrahydrofurans and any desired mixtures of two or more of the aforementioned compounds.

10. Method according to at least one of the preceding claims,
**characterized in that**
the crosslinker component further comprises at least one filler, which is preferably selected from the group consisting of clay, montmorillonite, saponite, hectorite, mica, vermiculite, bentonite, nontronite, beidellite, volkonskoite, manadiite, kenyaite, smectite, bederite, carbon black, silicon carbide,
silica salt, metal oxides and any desired mixtures of two or more of the aforementioned compounds.

11. Method according to at least one of the preceding claims,
**characterized in that**
the crosslinker component comprises between 0.1 and 75 mol%, preferably between 1 and 60 mol% and more preferably between 2 and 40 mol% of polyol having a weight-averaged molecular weight of more than 1000 g/mol.

12. Method according to at least one of the preceding claims,
**characterized in that**
the prepolymer is a prepolymer consisting of methylenediphenyl diisocyanate and a polycarbonate polyol and having a weight-averaged molecular weight between 1000 and 4000 g/mol and preferably having a weight-averaged molecular weight between 1500 and 3500 g/mol.

13. Method according to at least one of the preceding claims,
**characterized in that**
the prepolymer has an isocyanate content between 4 and 20 wt% and preferably between 5 and 14 wt%.

14. Method according to at least one of the preceding claims,
**characterized in that**
the at least one crosslinked polyurethane in the at least one layer forms the matrix which embeds a non-crimp fabric or a woven fabric.

## Revendications

1. Procédé de fabrication d'une enveloppe de presse pour un cylindre de presse, notamment pour un cylindre de presse d'une presse à sabot pour la déshydratation d'une bande de matériau fibreux, notamment d'une bande de papier, de carton, de tissu ou de cellulose, ou d'une bande de transport, notamment pour une machine pour la fabrication ou le traitement d'une bande de matériau fibreux, notamment d'une machine à papier, carton ou tissu, l'enveloppe de presse ou la bande de transport comprenant au moins une couche contenant un polyuréthane réticulé, le polyuréthane réticulé étant obtenu par l'étape selon laquelle un prépolymère, qui est le produit de réaction d'un composant isocyanate contenant du diisocyanate de méthylène-diphényle et d'un composant polyol contenant un polycarbonate-polyol, est mis en réaction avec un composant agent de réticulation, qui contient au moins un polyol ayant un poids moléculaire moyen en poids de plus de 1 000 g/mol.

2. Procédé selon la revendication 1, **caractérisé en ce que** ledit au moins un polyol contenu dans le composant agent de réticulation présente un poids moléculaire moyen en poids compris entre plus de 1 000 et 10 000 g/mol, de préférence compris entre plus de 1 000 et 4 000 g/mol, et de manière particulièrement préférée compris entre 1 200 et 3 500 g/mol.

3. Procédé selon la revendication 1 ou 2, **caractérisé en ce que** ledit au moins un polyol contenu dans le composant agent de réticulation ayant un poids moléculaire moyen en poids de plus de 1 000 g/mol présente une fonctionnalité de groupes hydroxyle de 2 à 8, de préférence de 2 à 4 et de manière particulièrement préférée de 2.

4. Procédé selon au moins l'une quelconque des revendications précédentes, **caractérisé en ce que** ledit au moins un polyol contenu dans le composant agent de réticulation ayant un poids moléculaire moyen en poids de plus de 1 000 g/mol est un polycarbonate-polyol ayant un poids moléculaire moyen en poids de plus de 1 000 g/mol.

5. Procédé selon la revendication 4, **caractérisé en ce que** le polycarbonate-polyol présente une teneur en groupes carbonate comprise entre 20 et 80 % en poids et de préférence entre 25 et 50 % en poids.

6. Procédé selon la revendication 4 ou 5, **caractérisé en ce que** le polycarbonate-polyol présente la formule générale (I) :
HO-R¹-(O(O)C-O-R²)ₙ-OH (I)
dans laquelle
R¹ et R² représentent, indépendamment l'un de l'autre, un groupe hydrocarboné aliphatique, alicyclique, aromatique ou hétérocyclique, qui est éventuellement substitué, de préférence un groupe hydrocarboné en C₁-C₂₀ aliphatique, alicyclique, aromatique ou hétérocyclique éventuellement substitué, de manière particulièrement préférée un groupe alkyle en C₁-C₁₄ linéaire ou ramifié, éventuellement substitué par des groupes OH, et de manière tout particulièrement préférée un groupe alkyle en C₁-C₁₀ linéaire ou ramifié, éventuellement substitué par des groupes OH, et
n représente un nombre entier compris entre 2 et 50, de préférence entre 4 et 40, et de manière particulièrement préférée entre 8 et 30.

7. Procédé selon au moins l'une quelconque des revendications précédentes, **caractérisé en ce que** le composant agent de réticulation contient en outre au moins une amine en tant qu'agent de réticulation, ladite au moins une amine étant de préférence choisie dans le groupe constitué par la 4,4'-méthylène-bis-(2,6-diéthyl-3-chloroaniline), la 4,4'-méthylène-bis-(2-chloroaniline), la 4,4'-méthylène-bis-(2-éthylbenzylamine), la 4,4'-méthylène-bis-(2,6-diéthylaniline), la 4,4'-méthylène-bis-(cyclohexylamine), la diéthylméthylbenzène-diamine, le 4,4'-diaminodicyclohexylméthane, le 4,4'-diamino-3,3'-diméthyl-dicyclohexylméthane, le 4,4'-diaminodiphénylméthane, la 3,5-diméthylthio-tolyl-diamine, la 3,5-diméthyltolyl-2,4-diamine, la 3,5-diméthyltolyl-2,6-diamine, le di-p-amino-benzoate d'oxyde de polytétraméthylène, le bis-(4-aminobenzoate) de poly(éther de tétraméthylène-3-méthyltétraméthylène)glycol, le bis-(4-aminobenzoate) de triméthylène, le 4-chloro-3,5-diaminobenzoate d'isobutyle, le bromure de tétraméthylammonium, l'éthylène-diamine, l'hydrazine, l'hexaméthylène-diamine, l'o-phénylène-diamine, la m-phénylène-diamine, la p-phénylène-diamine, le 1,4-diaminocyclohexane, le 1,2-diaminocyclohexane, l'isophorone-diamine, la diéthyltoluène-diamine, la 3,5-diméthylthio-2,4-toluène-diamine, la 3,5-diméthylthio-2,6-toluène-diamine et les mélanges quelconques de deux ou plus des composés susmentionnés.

8. Procédé selon au moins l'une quelconque des revendications précédentes, **caractérisé en ce que** le composant agent de réticulation contient en outre au moins un catalyseur, ledit au moins un catalyseur étant de préférence un composé métallo-organique et/ou une amine tertiaire, et étant de manière particulièrement préférée un composé qui est choisi dans le groupe constitué par le dilaurate de dibutylétain, l'octoate d'étain, le diacétate de dioctylétain, le mercaptide de dibutylétain, l'oxyde de dibutylétain, le mercaptide de diméthylétain, le mercaptide de dioctylétain, le carboxylate de diméthylétain, l'éther de bis-(2-diméthylaminoéthyle), les alkylmorpholines, le 1,4-diazabicyclooctane, la N,N-alkylbenzylamine, le 1,2-diméthylimidazole, la N,N-diméthylcyclohexylamine, la triéthylène-diamine, la N,N,N',N'-tétraméthylène-diamine, le dicarboxylate de dioctyle, le dimercaptide de dioctylétain et les mélanges quelconques de deux ou plus des composés susmentionnés.

9. Procédé selon au moins l'une quelconque des revendications précédentes, **caractérisé en ce que** le composant agent de réticulation contient en outre au moins un polyol supplémentaire, qui est de préférence choisi dans le groupe constitué par l'éthylène glycol, le diéthylène glycol, le propylène glycol, le dipropylène glycol, le polypropylène glycol, le polybutylène glycol, le 1,4-butanediol, le 1,3-propanediol, le 1,5-pentanediol, le 1,6-hexanediol, le polyéthylène glycol, la N-N'-bis-(2-hydroxypropylaniline), l'éther de di-(8-hydroxyéthyle), l'éther de bis-(2-hydroxyéthyle), les triols, les polytétrahydrofuranes et les mélanges quelconques de deux ou plus des composés susmentionnés.

10. Procédé selon au moins l'une quelconque des revendications précédentes, **caractérisé en ce que** le composant agent de réticulation contient en outre au moins une charge, qui est de préférence choisie dans le groupe constitué par l'argile, la montmorillonite, la saponite, l'hectorite, le mica, la vermiculite, la bentonite, la nontronite, la beidellite, la volkonskoïte, la manadiite, la kényaïte, la smectite, la bédérite, le noir de carbone, le carbure de silicium, un sel de silice, les oxydes métalliques et les mélanges quelconques de deux ou plus des composés susmentionnés.

11. Procédé selon au moins l'une quelconque des revendications précédentes, **caractérisé en ce que** le composant agent de réticulation contient entre 0,1 et 75 % en moles, de préférence entre 1 et 60 % en moles et de manière particulièrement préférée entre 2 et 40 % en moles d'un polyol ayant un poids moléculaire moyen en poids de plus de 1 000 g/mol.

12. Procédé selon au moins l'une quelconque des revendications précédentes, **caractérisé en ce que** le prépolymère est un prépolymère constitué de diisocyanate de méthylène-diphényle et d'un polycarbonate-polyol, ayant un poids moléculaire moyen en poids compris entre 1 000 et 4 000 g/mol, et de préférence ayant un poids moléculaire moyen en poids compris entre 1 500 et 3 500 g/mol.

13. Procédé selon au moins l'une quelconque des revendications précédentes, **caractérisé en ce que** le prépolymère présente une teneur en isocyanate comprise entre 4 et 20 % en poids, et de préférence entre 5 et 14 % en poids.

14. Procédé selon au moins l'une quelconque des revendications précédentes, **caractérisé en ce que** ledit au moins un polyuréthane réticulé forme dans ladite au moins une couche la matrice dans laquelle un non-tissé de fibres ou un tissu de fibres est incorporé.
